Europäisches Patentamt

European Patent Office

Office européen des brevets

(19)

(11) Publication number: **0 216 906 B1**

(12) **EUROPEAN PATENT SPECIFICATION**

(45) Date of publication of patent specification: **02.01.92**  (51) Int. Cl.⁵: **B64C 13/18**, G05D 1/08

(21) Application number: **86902632.8**

(22) Date of filing: **02.04.86**

(86) International application number:
**PCT/US86/00656**

(87) International publication number:
**WO 86/05760 (09.10.86 86/22)**

(54) **AUTHORITY LIMITER.**

(30) Priority: **02.04.85 US 719150**

(43) Date of publication of application:
**08.04.87 Bulletin 87/15**

(45) Publication of the grant of the patent:
**02.01.92 Bulletin 92/01**

(84) Designated Contracting States:
**FR GB IT NL**

(56) References cited:
| | |
|---|---|
| US-A- 2 511 846 | US-A- 3 111 028 |
| US-A- 3 182 244 | US-A- 3 329 012 |
| US-A- 3 587 420 | US-A- 3 595 093 |
| US-A- 3 673 977 | US-A- 3 848 833 |
| US-A- 3 886 562 | US-A- 4 006 395 |
| US-A- 4 182 979 | US-A- 4 184 107 |
| US-A- 4 446 746 | |

(73) Proprietor: **PLESSEY INCORPORATED**
**277 Park Avenue**
**New York, NY 10172(US)**

(72) Inventor: **BARBA, Valentin, G.**
**3 Jeffrey Lane**
**Princeton, NJ 08550(US)**
Inventor: **SHUBE, Eugene, E.**
**564 Ridge Road**
**Elmont, NY 11003(US)**

(74) Representative: **Elliott, Frank Edward**
**GEC Patent Department (Chelmsford Office)**
**GEC-Marconi Research Centre West Hannin-**
**gfield Road**
**Great Baddow Chelmsford Essex CM2**
**8HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an authority limiter, i.e. a mechanism which provides a desirable opposing force or torque gradient by electrical means. When installed in airplanes, this mechanism provides an electrically clutched additional torque gradient to a lateral or roll control system to limit the output of a power control unit operated through, for example, an autopilot transfer device.

Autopilot systems are known and are presently used in many different types of aircraft. Conventionally, an autopilot instruction e.g. change of course or altitude is provided in the form of an electrical instruction which is fed to a particular servo-motor or motors to actuate control surfaces of the aircraft. In order that the controls do not over-react or cause the aircraft to be stressed beyond predetermined limits, it is known to provide rate limiting or authority limiting means to limit the torque output of the servo-motors. US patent specification No. 3848833 describes an automatic flight control system incorporating authority limiters and permitting switching between autopilot and manual control of an aircraft. In authority limiters as described in this US specification, the power input to the servomotors is controlled to provide authority limiting.

It is an object of the present invention to provide an improved authority limiter.

The invention accordingly provides an authority limiter, for limiting the torque applied by a servo-motor to an aircraft control surface, the limiter being characterised by an input shaft rotatable in either direction, a motor gear output shaft, electromagnetic clutch means arranged, when energised, to couple the input and output shafts, a torque motor geared to the output shaft to drive the same, position sensing means for providing an output indicative of the angular position of the output shaft relative to a null position thereof, and electronic circuit means for supplying current, in dependance upon the sensed position of the output shaft, to the torque motor to apply restoring torque to the output shaft.

## Brief Description of Drawings

For a fuller understanding of the nature and objects of the invention, the following detailed description is provided which is taken in connection with the accompanying drawings, in which:

Figure 1 is an axial section of an embodiment of an authority limiter of the present invention, illustrating an electrically clutched opposing torque mechanism.

Figure 2 is a front view of the mechanism shown in Figure 1.

Figure 3 is a transverse section taken substantially on line 3-3 of Figure 1.

Figure 4 is a partial section taken on line 4-4 of Figure 1.

Figure 5 is the schematic circuit of the mechanism shown in Figure 1.

Figure 6a details a positioning disc and optical sensor locations.

Figure 6b shows a cross-sectional view of the positioning disc and optical sensors at a zero position.

Figure 7 shows the relationship between resistance torque and shaft rotation.

Figure 8 is the schematic circuit of the mechanism which utilizes a potentiometer as a position sensor.

## Detailed Description of the Invention

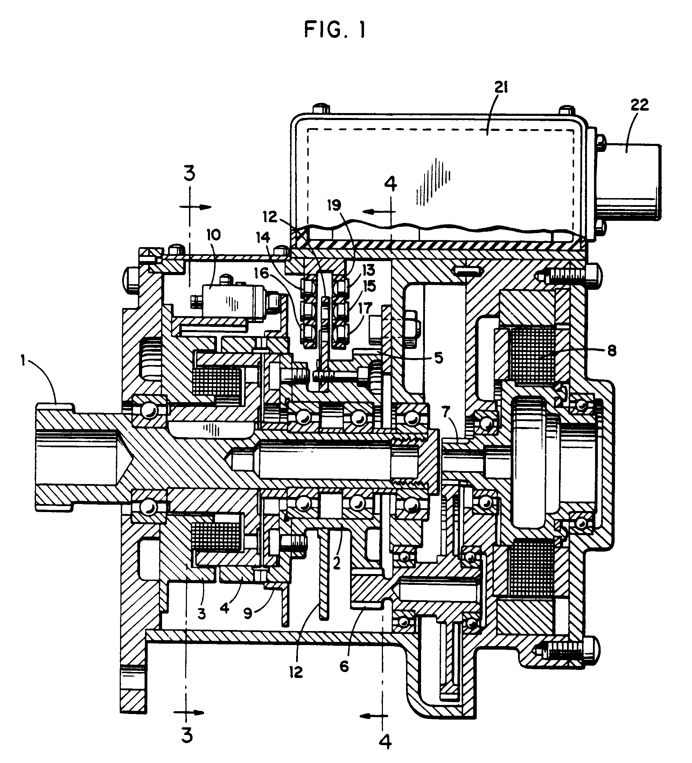

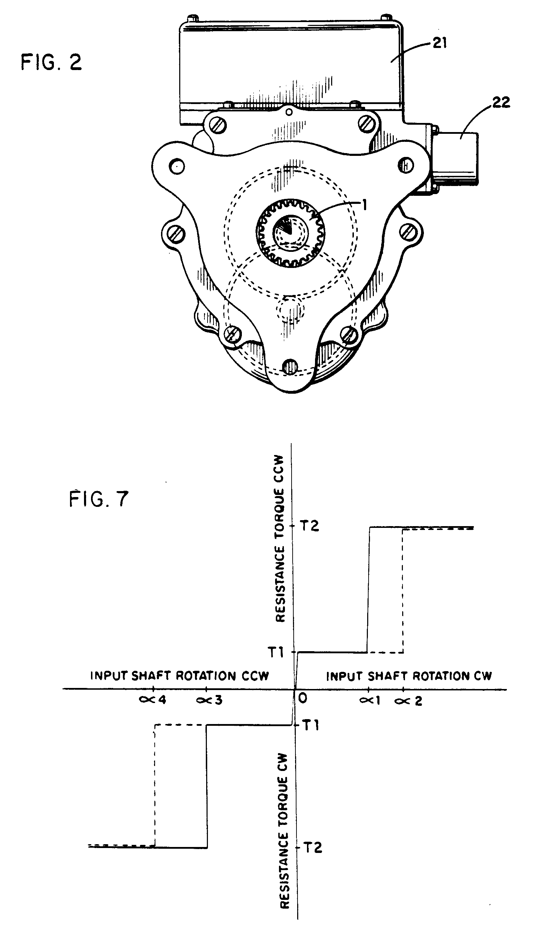

Referring to drawings, in which like numerals identify similar parts throughout, Figures 1 to 7, inclusive, illustrate an embodiment of an authority limiter in the form of a torque gradient mechanism for use with an autopilot lateral control.

The mechanism consists basically of a geared torque motor, related electronics and an electromagnetic clutch. An input shaft 1, which is normally free to rotate in either direction, becomes coupled to a motor gear output shaft 2 when power is applied to clutch terminals, e.g. when an autopilot is activated. When in the engaged position, the torque required to rotate the input shaft in either direction follows an envelope determined by a position disc attached to the motor gear output shaft 2 controlled by the related electronics as will be seen from the description of an embodiment of the present invention. When the clutch is disengaged, the motor gear output shaft 2 is returned automatically to its initial position.

Figure 1 to 7 inclusive, present an embodiment of the mechanism of an authority limiter of the present invention in which two levels of resistance torque $T_1$ and $T_2$, for each direction of output shaft rotation, are provided. As can be seen from Figure 1, the input shaft 1 becomes coupled to the motor gear output shaft 2 when power is applied to the electromagnetic clutch 3. Attached to the shaft 2 are an armature 4 of the clutch and a spur gear 5. This spur gear 5, together with a spur gear 6 and a rotor pinion 7 form a two stage gear coupled to a torque motor 8.

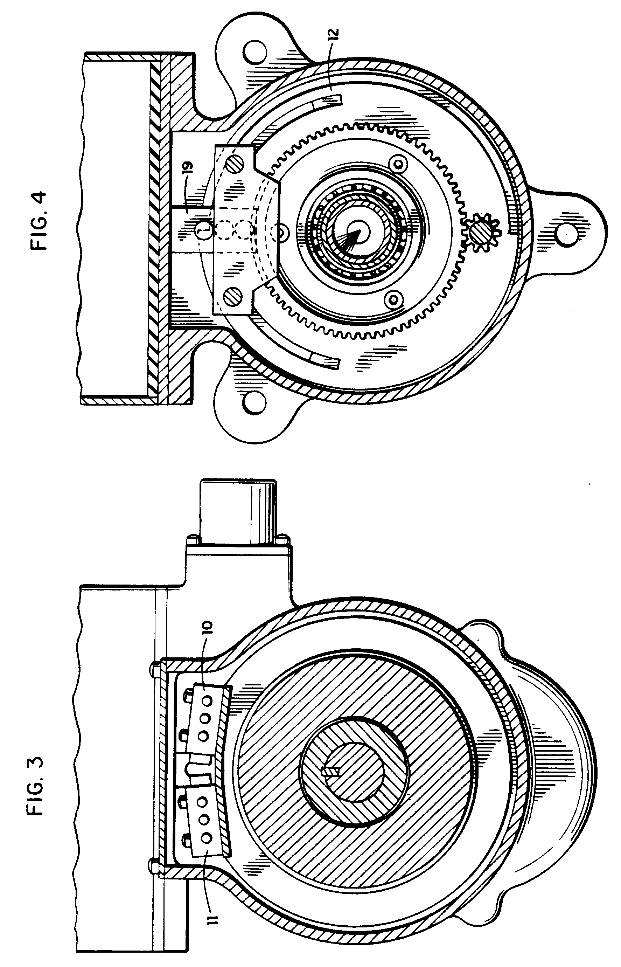

Attached to the clutch armature 4 is a disc 9, which activates switches 10, 11 (switch 11 is shown in Figure 3) signalling the clutch status, and an obtruding disc 12 which activates three opto coupler sensors including LED-sensor pairs 13-14, 15-16 and 17-18. The sensor pairs are mounted in a support bracket 19 of a main housing 20. The related electronics are packaged in an electrical assembly 21 and an electric connector 22 enables connection to an external power supply and transmission and/or receipt of control signals.

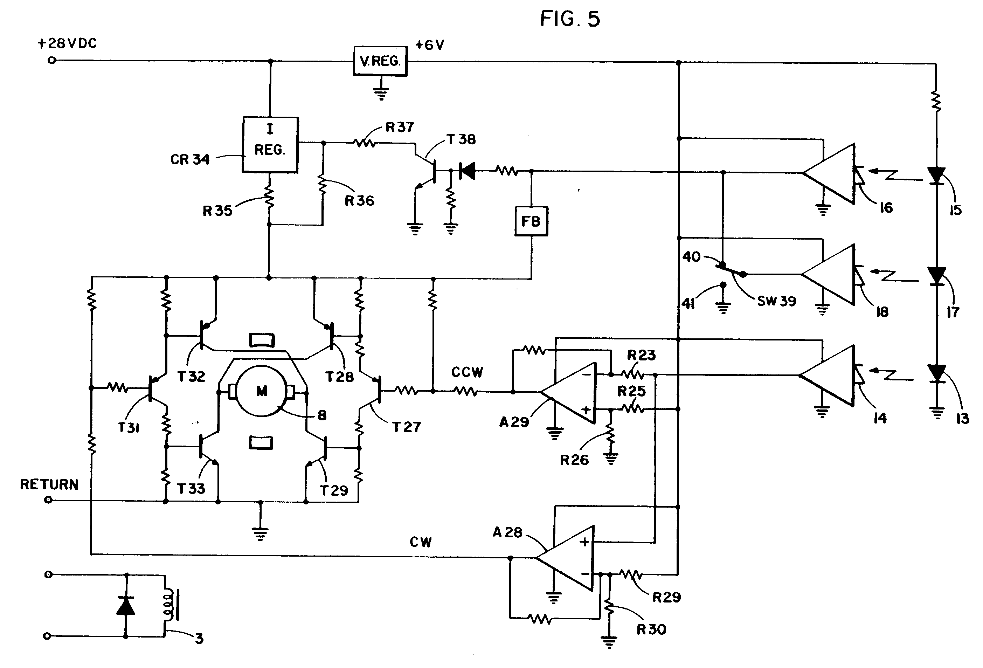

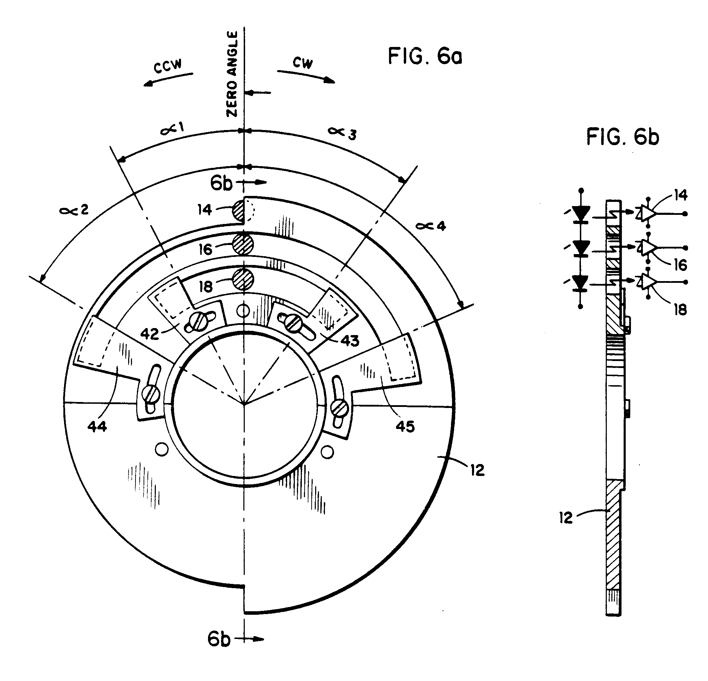

To describe the mode of operation of the authority limiter, it is assumed firstly that the obtruding disc 12 is in a zero position as it is shown in Figure 6, and the clutch 3 is engaged. In this position half of the sensor 14 active area is illuminated by the light emitting diode 13 (due to an etched outer radial slot on the disc 12) and therefore the output voltage of this sensor will be half of its maximum value, which value occurs when all its active area is illuminated. As shown in the schematic of Figure 5, the output voltage of sensor 14 is applied through a resistance R23 to the inverting input terminal of an operational amplifier A24. Through a divider formed by two resistances R25 and R26, a slightly higher voltage value is applied to the noninverting input terminal. Therefore, the output voltage of the op amp A24 is "high", transistor T27 is "off" and therefore bridge power transistors T28 and T29 are "off".

The same output voltage of the sensor 14 is applied to the noninverting terminal of an operational amplifier A28. Through a divider formed by resistances R29 and R30 a slightly lower voltage is applied to the inverting input terminal. Therefore the output voltage of the op amp A28 is "high", transistors T31 is "off" and bridge power transistors T32 and T33 are "off" too. In conclusion, when the disc 12 is in the zero position, all bridge power transistors are off and, therefore, because the torque motor 8 is disconnected from power supply, no resistance torque is provided.

Whilst the clutch 3 is energised, slight rotations of the input shaft in either direction will produce the same rotations of the obtruding disc 12 causing variations of the illuminated active area of the sensor 14 and corresponding variations of the sensor 14 output voltages. If the disc is rotated in the clockwise CW direction (with respect to Figure 6a) the sensor 14 illuminated active area will increase, the positive output voltage of sensor 14 applied to op amp A24 and A28 will increase accordingly, op amp A28 will stay high but op amp A24 will turn "low" and therefore transistors T27, T28 and T29 will turn "on" and will connect the motor 8 to its power supply. Current supplied to the motor and controlled by a current regulator CR34 produces a torque in CCW (counter clockwise) direction and therefore the motor 8 will try to bring the disc 12 back to the initial zero position. The motor opposing torque is proportional to the current supplied by current regulator CR34 which is connected as a constant current source.

Two values of constant current and therefore two values for motor opposing torque in either direction (corresponding to two angle modes of operation) are determined by the status of a transistor T38 controlled by the outputs of the sensors 16 and 18. When outputs of the sensors 16 and 18 are high, the transistor T38 is "on", and the resistances R35, R36 and R37 establish the first level of the current delivered by the regulator CR34 corresponding to the torque $T_1$.

When the output of the sensor 16 or 18 or both outputs are "low" the transistor T38 is cut off and a second level of current is delivered by the regulator CR34 corresponding to the torque $T_2$. The current level is established by the resistances R35 and R36, the resistance R37 being disconnected from the ground. By operating the switch SW39, two modes $\alpha_1$ - $\alpha_3$ mode when SW 39 is connected to terminal 40, and $\alpha_2$ - $\alpha_4$ when SW 39 is connected to terminal 41, are provided. In $\alpha_1$ - $\alpha_3$ angular mode, the first torque level is maintained at the $T_1$ value between zero angle and $\alpha_1$ for CW rotation of the disc 12 and at the $T_1$ value between zero angle and $\alpha_3$ for CCW rotation of the disc 12 because the sensor 28 is permanently illuminated and therefore the transistor 38 is "on"; for disc rotations higher than $\alpha_1$ in CW direction and higher than $\alpha_3$ in CCW direction, the output voltage of the sensor 18 turns low because the sensor 18 is shaded, i.e., disc 12 interrupts the optical path between LED 17 and sensor 18. By turning sensor 18 "low" the transistor T38 is cut off and the second current level is delivered by the current regulator CR34. Therefore in $\alpha_1$ -$\alpha_3$ mode for a disc angle rotation higher than $\alpha_1$ in CW direction and higher than $\alpha_3$ in CCW direction, the opposing torque of the motor will increase to the $T_2$ value for either CW or CCW input shaft rotation. The value of angles $\alpha_1$ and $\alpha_3$ can be adjusted by moving plates 42 and 43 over the slots in disc 12.

In $\alpha_2$ - $\alpha_4$ mode, the sensor 18 output is connected to the ground terminal 41 by the switch 39 and therefore the torque level angles are controlled by the sensor 16. The first torque level is maintained now at the $T_1$ value between zero angle and $\alpha_2$ for CW rotation of the disc 12 at the same $T_1$ value between zero angle and $\alpha_4$ for CCW rotation of the disc 12 because within these angles the sensor 16 is illuminated; for disc 12 rotations greater than $\alpha_2$ in CW direction and greater than $\alpha_4$ in CCW direction, the sensor 16 enters in dark zones and therefore its output is turned "low", transistor T38 is cut off and the second current level is delivered by the regulator CR34 to the torque motor 8. Therefore in $\alpha_2$ - $\alpha_4$ mode, for a disc 12 angle rotation higher than $\alpha_2$ in CW direction and higher than $\alpha_4$ in CCW direction, the opposing torque of the motor will increase to the $T_2$ value for either CW or CCW input shaft rotation. The value of angles $\alpha_2$ and $\alpha_4$ can be adjusted by moving plates 44 and 45.

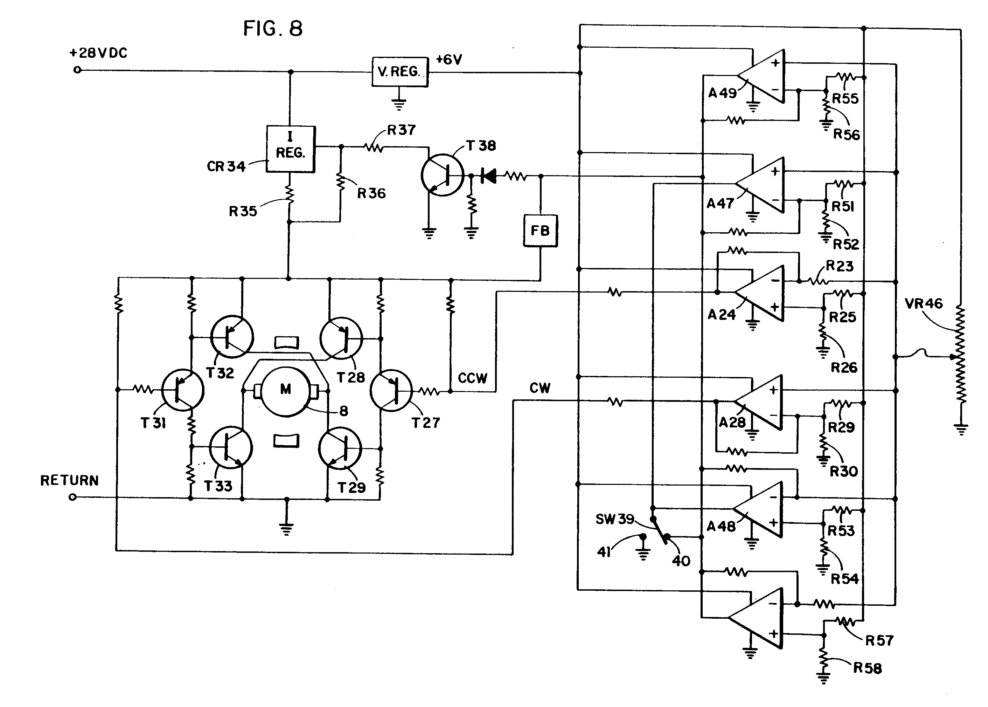

Figure 7 shows graphically the relationship between resistance torque versus input shaft rotation. In one working embodiment, the torque on the input shaft is arranged to be constant within an angular rotation of 17 to 125 degrees. The restoring torque within that range is 14.12 Nm (125 pound inches).

Figure 8 represents an embodiment of the present invention in which the positioning disc 12 and opto couplers 13-14, 15-16 and 17-18 are replaced by a positioning potentiometer VR 46 and a pair of op amps for each angle mode, op amps A47, A48, ford $\alpha_1$ - $\alpha_3$ mode and op amps A49, A50, for $\alpha_2$ - $\alpha_4$ mode. The positioning potentiometer is mechanically coupled to the clutch armature 4 as described above with respect to obtruding disc 12.

The value of angles $\alpha_1$ and $\alpha_3$ can be adjusted by adjusting resistance dividers R51-R52 and R53-R54. The value of angles $\alpha_2$ and $\alpha_4$ can be adjusted by adjusting resistance dividers R55-R56 and R57-R58.

In order to enable a complete understanding of the present invention, two examples have been set forth. It is understood, however, that the invention is not limited thereto and variations, within the scope of the appended claims are contemplated as being within purview of the present invention.

## Claims

1. An authority limiter, for limiting the torque applied by a servo-motor to an aircraft control surface, the limiter being characterised by an input shaft (1) rotatable in either direction, a motor gear output shaft (2), electromagnetic clutch means (3) arranged, when energised, to couple the input and output shafts, a torque motor (8) geared to the output shaft to drive the same, position sensing means (12, 13, 14, 15, 16, 17, 18; VR46) for providing an output indicative of the angular position of the output shaft relative to a null position thereof, and electronic circuit means (21) for supplying current, in dependance upon the sensed position of the output shaft, to the torque motor (8) to apply restoring torque to the output shaft.

2. A limiter as claimed in claim 1 characterised in that the position sensing means (12, 13, 14, 15, 16, 17, 18) comprises an obtruding disc attached to the output shaft (2) and having cut out portions, a plurality of opto sensors (13, 14; 15, 16; 17, 18) being located relative to the disc for activation in dependance upon the position of the disc and the consequent presence or absence of the cut out portions.

3. A limiter as claimed in claim 2 characterised in that the cut out portions have different circumferential positions and/or lengths, and in that a plurality of different restoring torques may be applied to the output shaft, in accordance with predetermined angle modes represented by the position and/or length of the slots.

4. A limiter as claimed in claim 3 characterised in that the obtruding disc has an etched slot constituting a first of the cut out portions for determining the null position, and a further slot, corresponding to another of the cut out portions, for each of the predetermined angle modes.

5. A limiter as claimed in claim 2, 3 or 4 characterised in that the disc (12) has a plurality of separate plates (42, 43, 44, 45) adjustably attached to the disc, and means for adjusting the position of the plates to determine the positions of the cut out portions.

6. A limiter as claimed in claim 2, 3, 4 or 5 characterised in that each opto sensor comprises a light source and a light detector, each source and its detector being located at opposite sides of the disc for sensing the presence of absence of a respective cut out portion therebetween, and a first sensor being arranged to detect movement of the output shaft away from its null position.

7. A limiter as claimed in claim 1 characterised in that the position sensing means comprises a potentiometer (VR46) adjustable in dependance upon the angular position of the output shaft (2).

8. A limiter as claimed in claim 7 characterised in that the potentiometer (VR46) is mechanically coupled to an armature (4) of the clutch means (3), the armature (4) being mounted on the output shaft (2).

9. A limiter as claimed in claim 8 characterised in that resistance dividers (R51, R52; R55, R56) are provided, adjustment of the dividers serving to determine predetermined angle modes of the limiter, for supplying levels of current to the torque motor in dependance upon the angular rotation of the output shaft from the null position thereof.

10. A limiter as claimed in any preceding claim characterised in that the electronic circuit means (21) comprises a constant current source (CR34) arranged to supply current to the torque motor at a plurality of levels dependant upon the relation of the output shaft from the null position.

## Revendications

1. Limiteur d'autorité, servant à limiter le couple appliqué par un servomoteur à une surface de commande d'aéronef, le limiteur étant caractérisé par un arbre d'entrée (1) qui peut tourner dans l'une ou l'autre direction, un arbre de sortie de transmission de moteur (2), un moyen d'embrayage électromagnétique (3) conçu pour coupler, lorsqu'il est excité, les arbres d'entrée et de sortie, un moteur de couple (8) engrené sur l'arbre de sortie afin d'entraîner ce dernier, un moyen de détection de position (12, 13, 14, 15, 16, 17, 18 ; VR46) servant à produire un signal de sortie indicatif de la position angulaire de l'arbre de sortie par rapport à une position zéro de celui-ci, et un moyen du type circuit électronique (21) servant à fournir un courant, en fonction de la position détectée de l'arbre de sortie, au moteur de couple (8) de façon à appliquer à l'arbre de sortie un couple de retour à la position primitive.

2. Limiteur selon la revendication 1, caractérisé en ce que le moyen de détection de position (12, 13, 14, 15, 16, 17, 18) comprend un disque de rappel d'indication fixé à l'arbre de sortie (2) et possédant des parties découpées, plusieurs capteurs optiques (13, 14 ; 15, 16 ; 17, 18) étant placés relativement au disque de façon à être activés en fonction de la position du disque et de la présence ou de l'absence, qui en découle, des parties découpées.

3. Limiteur selon la revendication 2, caractérisé en ce que les parties découpées ont des longueurs et, ou bien, des positions circonférentielles différentes et en ce que plusieurs couples de retour différents peuvent être appliqués à l'arbre de sortie en fonction de modes d'angles prédéterminés représentés par la position et, ou bien, la longueur des fentes.

4. Limiteur selon la revendication 3, caractérisé en ce que le disque de rappel d'indication possède une fente gravée constituant une première des parties découpées et servant à déterminer la position zéro, et une autre fente, correspondant à une autre des parties découpées, pour chacun des modes d'angles prédéterminés.

5. Limiteur selon la revendication 2, 3 ou 4, caractérisé en ce que le disque (12) possède plusieurs plaques séparées (42, 43, 44, 45) fixées de manière réglable au disque, et des moyens permettant d'ajuster la position des plaques afin de déterminer les positions des parties découpées.

6. Limiteur selon la revendication 2, 3, 4 ou 5, caractérisé en ce que chaque capteur optique comprend une source lumineuse et un détecteur de lumière, chaque source et son détecteur étant placés de part et d'autre du disque de manière à pouvoir détecter la présence ou l'absence d'une partie découpée respective entre eux, et un premier capteur étant conçu pour détecter le déplacement de l'arbre de sortie s'éloignant de sa position zéro.

7. Limiteur selon la revendication 1, caractérisé en ce que le moyen de détection de position comprend un potentiomètre (VR46) qui est réglable en fonction de la position angulaire de l'arbre de sortie (2).

8. Limiteur selon la revendication 7, caractérisé en ce que le potentiomètre (VR46) est mécaniquement couplé à une armature (4) du moyen d'embrayage (3), l'armature (4) étant montée sur l'arbre de sortie (2).

9. Limiteur selon la revendication 8, caractérisé en ce que des diviseurs de résistance (R51, R52 ; R55, R56) sont prévus, le réglage des diviseurs servant à déterminer des modes d'angles prédéterminés du limiteur, afin de fournir des niveaux de courant au moteur de couple en fonction de la rotation angulaire de l'arbre de sortie par rapport à sa position zéro.

10. Limiteur selon l'une quelconque des revendications précédentes, caractérisé en ce que le moyen du type circuit électronique (21) comprend une source de courant constant (CR34) destinée à fournir du courant au moteur de couple suivant plusieurs niveaux en fonction de la relation de l'arbre de sortie vis-à-vis de la position zéro.

## Patentansprüche

1. Ausschlagbegrenzer zum Begrenzen des durch einen Servomotor an eine Luftfahrzeug-Steueroberfläche angelegten Drehmoments, wobei der Begrenzer gekennzeichnet ist durch eine in beiden Richtungen drehbare Eingangswelle (1), eine Motorgetriebe-Ausgangswelle (2), Elektromagnet-Kupplungsmittel (3), das ausgelegt ist, im beaufschlagten Zustand die Eingangs- und Ausgangswelle miteinander zu koppeln, einen Drehmoment-Motor (8), der mit der Ausgangswelle zu deren Antrieb über ein Getriebe verbunden ist, Lagefühlermittel (12,13,14,15,16,17,18; VR46) zum Schaffen eines für die Winkellage der Ausgangswelle relativ zu einer Nullage derselben bezeichnendes Ausgangssignals und elektronisches Schaltungsmittel (21) zum Zuführen von Strom zu dem Drehmomentmotor (8) in Abhängigkeit von der erfaßten Lage der Ausgangswelle, um Rückstell-Drehmoment an die Ausgangswelle anzulegen.

2. Begrenzer nach Anspruch 1, dadurch gekennzeichnet, daß das Lagefühlermittel (12,13,14,15,16,17,18) eine an der Ausgangswelle (2) angebrachte Abdeckscheibe umfaßt mit Ausschnitten, wobei eine Vielzahl von Optofühlern (13, 14; 15,16; 17,18) in Relation zur Scheibe angeordnet ist, um in Abhängigkeit von der Drehlage der Scheibe und der daraus folgenden An- oder Abwesenheit der Ausschnitte beaufschlagt zu werden.

3. Begrenzer nach Anspruch 2, dadurch gekennzeichnet, daß die Ausschnitte unterschiedliche Umfangs-Lagen und/oder -Längen besitzen, und daß eine Vielzahl von unterschiedlichen Rückstell-Drehmomentwerten an die Ausgangswelle angelegt werden kann entsprechend den vorbestimmten Winkelbetriebsarten, welche durch die Lage und/oder Länge der Schlitze repräsentiert werden.

4. Begrenzer nach Anspruch 3, dadurch gekennzeichnet, daß die Abdeckscheibe ein geätzten Schlitz besitzt, der einen ersten Ausschnitt bildet zum Bestimmen der Nullage, und je einen weiteren Schlitz entsprechend einem weiteren Ausschnitt für jede vorbestimmte Winkel-Betriebsart.

5. Begrenzer nach Anspruch 2, 3 oder 4, dadurch gekennzeichnet, daß die Scheibe (12) eine Vielzahl von getrennten Platten (42,43,44,45) besitzt und Mittel zum Einstellen der Lage der Platten, um die Lage der Ausschnitte zu bestimmen.

6. Begrenzer nach Anspruch 2, 3, 4 oder 5, dadurch gekennzeichnet, daß jeder Optofühler eine Lichtquelle und einen Lichtdetektor umfaßt, wobei jede Quelle und ihr Detektor an den gegenüberliegenden Seiten der Scheibe angeordnet sind, um die An- oder Abwesenheit eines jeweiligen Ausschnitts dazwischen zu erfassen, und ein erster Fühler so angeordnet ist, daß er eine Bewegung der Ausgangswelle von ihrer Nullage weg erfaßt.

7. Begrenzer nach Anspruch 1, dadurch gekennzeichnet, daß das Lagefühlermittel ein Potentiometer (VR46) umfaßt, das in Abhängigkeit von der Winkellage der Ausgangswelle (2) einstellbar ist.

8. Begrenzer nach Anspruch 7, dadurch gekennzeichnet, daß das Potentiometer (VR46) mechanisch mit einem Anker (4) des Kupplungsmittels (3) gekoppelt und der Anker (4) an der Ausgangswelle (2) angebracht ist.

9. Begrenzer nach Anspruch 8, dadurch gekennzeichnet, daß Widerstandsteiler (R51,R52; R55,R56) vorgesehen sind, und Einstellung der Teiler dazu dient, vorbestimmte Winkel-Betriebsarten des Begrenzers zu bestimmen zum Zuführen von Strompegeln zu dem Drehmomentmotor in Abhängigkeit von der Winkeldrehung der Ausgangswelle von ihrer Nullage aus.

10. Begrenzer nach einem der vorangehenden Ansprüche, dadurch gekennzeichnet, daß das elektronische Schaltungsmittel (21) eine Konstantstromquelle (CR34) umfaßt, die ausgelegt ist, dem Drehmomentmotor Strom an einer Vielzahl von Pegeln zuzuführen in Abhängigkeit von der Relation der Ausgangswelle zu der Nullage.

FIG. 1

FIG. 2

FIG. 7

FIG. 4

FIG. 3

FIG. 5

EP 0 216 906 B1

FIG. 6a

FIG. 6b

FIG. 8